# EUROPÄISCHE PATENTANMELDUNG

(11) **EP 1 304 673 A2**
(43) Veröffentlichungstag der Anmeldung: **23.04.2003**
(21) Anmeldenummer: 02023234.4
(22) Anmeldetag: 16.10.2002
(51) Int. Cl.: G08C 17/02

(54) **Datenübermittlungs-Funknetz**

(30) Priorität: 19.10.2001 DE 10152554
(71) Anmelder: Diehl AKO Stiftung & Co. KG, 88239 Wangen (DE)
(72) Erfinder: Churt, Kerstin, Dr., 91217 Hersbruck (DE)
(74) Vertreter: Stammler, Wolfgang (DE), Dipl.-Phys.

(57) **Zusammenfassung**

Bei der drahtlosen Telegrammübermittlung (18) von Daten generierenden, unidirektional kommunizierenden Endgeräten (12) über Primärfunkstrecken (10) und über sich anschließende bidirektional arbeitende Datensammler (13) eines Funknetzes (11) zu einem Daten dokumentierenden Masterdatensammler (14) wird ein durch Redundanz infolge Mehrfachverbindungen über die Primärfunkstrecken (10) bedingter Speicher- und Selektionsaufwand vermieden und mit vereinfachten Datensammlern (13) dennoch eine sehr zuverlässige Telegrammübermittlung (18) erreicht, wenn aktuell für Primärfunkstrecken (10) von Endgeräten (12) Verteilkriterien wie z.B. empfangsfeldstärkeabhängige Güteinformationen (22) in Datensammlern (13) erfaßt und abgespeichert werden. Vom Masterdatensammler (14) erfolgt abhängig von den momentanen Verteilkriterien für jedes Endgerät (12) eine quasi-stationäre Zuordnung zu einem und nur einem der Datensammler (13) für die sich anschießenden Telegrammübermittlungen (18), bis z.B. periodisch oder ereignisgesteuert eine neue Zuordnung eines Endgerätes (12) wieder zu einem und nur einem eventuell anderen der Datensammler (13) erfolgt. Die Datensammler (13) fungieren auch untereinander als Relaisstationen (25) zur Weiterleitung der Datentelegramme (18) an den Masterdatensammler (14) und sind gegen auf unterschiedlichen Wegen entstehende Telegrammdubletten mit einer Sperre gegen Mehrfachauslesen desselben Datentelegrammes (18) ausgestattet.

## Beschreibung

Die Erfindung betrifft ein Funknetz gemäß dem Oberbegriff des Anspruches 1.

Ein derartiges, im US-Patent 5.553.094 näher beschriebenes Funknetz wird in den Vereinigten Staaten von Amerika durch die Firma Itron Inc. betrieben, um abrechnungsrelevante Verbrauchsdaten von über weite Räume verteilt residierenden Verbrauchern an wenigen leicht erreichbaren Orten gesammelt für die Verbrauchsabrechnung übernehmen zu können, ohne die Verbraucher in solchen dünn besiedelten Regionen einzeln zum Ablesen von Meßgeräten aufsuchen zu müssen. Jedes die Meßgeräte enthaltende Endgerät steht dort zur primären Übermittlung seiner Meßdaten-Telegramme mit wenigstens zwei Datensammlern parallel in Funkverbindung. Die Zuverlässigkeit dieses großflächig arbeitenden Funknetzes beruht auf dieser Redundanz in den primären Funkverbindungen zwischen einerseits den datengenerierenden Endgeräten bei den Verbrauchern und andererseits den Datensammlern zum Zwischenspeichern und Weiterleiten aktueller Datentelegramme. Dadurch liegen die aktuellen Daten eines jeden Endgerätes in wenigstens zweien der Datensammler komplett, inhaltlich übereinstimmend vor. Das bedingt allerdings insbesondere einen erheblichen Speicherplatzbedarf in den Datensammlern, und dann später im Zuge der Datenverarbeitung entsprechend hohen Zusatzaufwand zum Auffinden der aktuell gültigen Daten unter Ausscheiden der vom selben Endgerät stammenden Dubletten, die trotz gleicher Herkunft und gleichen Inhalts wegen der Übertragung über unterschiedliche Funkwege oder wegen vorübergehender Empfangsblockaden nur mehr oder weniger zeitversetzt verfügbar werden. Ein derart angelegtes Funknetz schlägt besonders dann hinsichtlich des technischen Aufwandes und der Kosten sehr negativ zu Buche, wenn eine Vielzahl von Daten-Endgeräten einander dichter benachbart betrieben wird, wie etwa in einer Vorortsiedlung oder gar in urbanen Mietshäusern.

In Erkenntnis dieser Gegebenheiten liegt der Erfindung die technische Problemstellung zugrunde, ein Funknetz gattungsgemäßer Art derart auszulegen, daß es insbesondere bei auch größerer Ansammlung räumlich auch dichter benachbart betriebener Endgeräte eine weniger aufwendige aber doch höchst flexible und zuverlässige Erfassung und Weiterleitung derer Daten gewährleistet.

Diese Aufgabe ist erfindungsgemäß durch die im Hauptanspruch angegebene Kombination der wesentlichen Merkmale gelöst, wonach solche Redundanz in den primären Datenübertragungen, also von den Endgeräten an jeweils den ersten im Netz folgenden Datensammler, gezielt ausgeschlossen wird. Statt dessen sind nun, im erfindungsgemäß ausgestalteten Funknetz, die Datensammler nicht mehr als Speicher für die Inhalte aller oder jedenfalls vieler willkürlich aufnehmbarer primärer Endgeräte-Telegramme unabhängig davon ausgelegt, welche Wege diese Primärdaten nehmen; vielmehr nehmen die Datensammler nun zunächst z.B. aus den aktuellen primären Funkverbindungen abgeleitete Verteilkriterien auf. Diese Kriterien werden aus den Datensammlern über bidirektionale Funkverbindungen von einem ihnen nachgeschalteten Master-Datensammler abgefragt, geordnet und derart der Konfiguration des Funknetzes zugrunde gelegt, daß bestimmte Endgeräte - und nur diese - bestimmten Datensammlern - und nur diesen - für den primären Datenempfang zugeordnet werden, um parallele Primärverbindungen von den Endgeräten her zuverlässig zu vermeiden. Dabei wird die Flexibilität des Netzes noch dadurch gesteigert, daß der Masterdatensammler sich bei lokal entsprechend günstigen Funkübertragungsgegebenheiten auch bestimmte Endgeräte direkt - ohne Zwischenschalten anderer Datensammler - zuordnen kann.

Ein solches für die jeweils gegebene primäre Funkverbindung im Datensammler abzuspeicherndes Verteilkriterium kann die jeweilige Empfangsqualität der einzelnen, auf jeweils ein bestimmtes Endgerät zurückgehenden, primären Funkverbindungen an den jeweiligen Betriebsorten der Datensammler sein. Dieses Kriterium der Empfangsqualität kann unmittelbar definiert werden, etwa in Hinblick auf die Störsituation in der Primärfunkverbindung über den Vergleich eines vorgegebenen Testtelegrammes mit dessem Empfangsbitmuster; oder mittelbar etwa einfach gemäß der Empfangsfeldstärke. Dann werden einem Datensammler z.B. nur die hier optimal zu empfangenden Endgeräte zum Zwischenspeichern von deren Datentelegrammen zugeordnet. Da diese Endgeräte danach, für die aktuelle Konfiguration des Funknetzes, keinem anderen der Datensammler mehr zugeordnet werden, sind parallele Primärverbindungen ausgeschlossen.

Ein anderes vorteilhaftes, eventuell sekundär einzusetzendes Verteilkriterium kann das Zugriffsvolumen sein : Wenn z.B. schon sehr viele primäre Funkverbindungen zu einem bestimmten der Datensammler bestehen, wird dieser für Aufnahme der Datentelegramme von weiteren Endgeräten selbst im Falle guter Empfangsqualität gesperrt, so daß sich andere Datensammler der verbleibenden Endgeräte annehmen müssen. Das ermöglicht eine wünschenswerten Beschränkung der Speicherkapazität in den Datensammlern und senkt dadurch auch den Energieverbrauch, verlängert also die batteriebetriebene Funktionsdauer der Datensammler. Weitergehend kann im Rahmen dieser Erfindung vorgesehen sein, diejenigen der Datensammler ganz außer Funktion zu setzen, die schließlich nur extrem wenigen Endgeräten zugeordnet sind, und jene Endgeräte gezielt anderen Datensammlern zuzuordnen, obgleich bezüglich derer das originäre Verteilkriterium nicht optimal war. So lassen sich Datensammler, die zum Netzaufbau nicht zwingend notwendig sind, im Zuge der Netzkonfiguration ermitteln und zur Energieeinsparung abschalten oder sogar ganz demontieren und einsparen.

Die Primärfunkverbindungen können unidirektional sein, um hier den schaltungstechnischen und betriebstechnischen Aufwand für einen Empfänger einzusparen. Wenn aber infolge Ausstattung der Endgeräte auch mit Empfängern bidirektionale Primärverbindungen realisierbar sind, erbringt das den Vorteil, dem Endgerät vom ersten nach der Primärfunkverbindung empfangenden Datensammler aus mitteilen zu können, daß ein verwertbares aktuelles Datentelegramm aufgenommen wurde und die Meßübertragung im Endgerät bis zum Ablauf einer vorgegebenen Zeitspanne oder bis zum Abruf eines neuen Datentelegrammes abgeschaltet werden kann, um die batteriegespeiste Betriebszeitspanne des Endgerätes zu verlängern.

Jedenfalls ist über die Verteilung der Endgeräte auf jeweils nur einen der Datensammler sichergestellt, daß aus den primären Funkverbindungen das aktuelle Datentelegramm eines Endgerätes in nur einem einzigen der Datensammler erstmals zwischengespeichert ist. In den anderen Datensammlern werden für dort zusätzlich empfangene Endgeräte keine primären Datentelegramme, sondern lediglich die Informationen über deren aktuellen Verteilkriterien herkunftsbezogen und zeitgestempelt abgespeichert. Selbst bei ungezielter Pauschalabfrage der Speicher aller Datensammler wird also jedes Datentelegramm nur einmal erscheinen, weil Redundanz über die primäre Funkverbindung mittels des Verteilkriteriums verhindert ist.

Die im zugeordneten Datensammler hinsichtlich ihrer Endgeräte-Herunft und ihres zeitlichen Auftretens gekennzeichnet (zeitgestempelt) abgespeicherten Verteilkriterien wie etwa Funkempfangs-Qualitätsinformationen werden vom Masterdatensammler aus den ihm im Funknetz vorgeschalteten Datensammlern abgefragt, um wie erwähnt bei der Erstkonfiguration des Netzes, und (zeitgesteuert oder ereignisgesteuert) auch später wieder einmal, aufgrund der jüngst festgestellten Qualität von Primärfunkverbindungen bestimmten Datensammlern bestimmte Endgeräte zuzuordnen - im Beispielsfalle jedes Endgerät nur dem einen Datensammler, zu dem gerade die beste Funkverbindung bestand. Daraufhin nimmt jeder Datensammler von diesen nur ihm zugeordneten Endgeräten die im Primärfunk eingehenden Datentelegramme auf, um diese - in der Regel unter Zwischenspeicherung nur des jeweils aktuellsten Telegrammes eines Endgerätes - spontan oder auf Abruf an den Masterdatensammler weiterzumelden.

Diese Datentelegramme beschreiben originär jedenfalls den aktuellen Inhalt der Endgeräte; zusätzlich können sie weitere Informationen übermitteln, etwa betriebstechnische wie über den Batterieladezustand bei autarkem Betrieb der Endgeräte. Wenn, was bevorzugt realisiert wird, auch das aktuelle, weitergeleitete Datentelegramm etwa zu Dokumentationszwecken oder zum Abruf vom Masterdatensammler her im Datensammler in einem eigenen Speicherbereich vom Umfang eines Datentelegrammes zwischengespeichert wird, erfolgt automatisch dessen Überschreiben durch das nächste von diesem Endgerät empfangene Datentelegramm, so daß zwangsläufig stets nur das aktuelle Datentelegramm an den Masterdatensammler übermittelt wird.

Die anderen Datensammler, denen ein bestimmtes Endgerät nicht zugeordnet ist, obgleich sie es empfangen können, nehmen dessen Datentelegramme nicht inhaltlich auf, sondern nur zur Ermittlung und Abspeicherung des Verteilkriteriums wie insbesondere der aktuellen Empfangsqualität dieser Funkverbindungen. Der Masterdatensammler bewirkt eine andere Zuordnung des Primärfunks von Endgeräten zu einem bestimmten Datensammler nur und erst dann, wenn das zeit- oder ereignisgesteuert ausgelöst wird, etwa weil die aktuell eingerichtete Funkverbindung vom Endgerät zu einem bestimmten Datensammler abgebrochen ist oder jedenfalls bedenklich schlechter wurde. Dann fragt der Masterdatensammler für das davon betroffene Endgerät die in den verschiedenen Datensammlern gespeicherten aktuellen Qualitätsinformationen ab, um ― für dieses Beispiel des Verteilkriteriums - die aktuell qualitativ beste Primärfunkverbindung aufzufinden und für die Übermittlung der Datentelegramme künftig über diesen anderen Datensammler freizugeben. Durch solches in langen Zyklen, etwa monatlich, erfolgendes Umorganisieren des Datenweges am Ende der Primärfunkverbindung wird sichergestellt, daß sich keine Langzeitfehler in die Datenübermittlung von bestimmten Endgeräten einschleichen können, wodurch die Zuverlässigkeit des Systems, auch ohne Redundanz in den Primärfunkverbindungen von den Endgeräten her, zusätzlich gesteigert wird.

Zusammengefaßt werden also bei dem erfindungsgemäß ausgelegten Netz zur drahtlosen Telegrammübermittlung deren Daten in Endgeräten generiert, über Primärfunkstrecken zu ersten Datensammlern kommuniziert und danach zu einem Daten dokumentierenden Masterdatensammler weitergeleitet - wobei aber Redundanz infolge Mehrfachverbindungen über die Primärfunkstrecken und ein dadurch bedingter Speicher- und Selektions-Mehraufwand vermieden wird. In diesem Zusammenhang ist eine sehr zuverlässige Datentelegramm-Übermittlung mit vereinfacht ausgestatteten Datensammlern erreicht, indem für die Primärfunkstrecken aktuelle Verteilkriterien wie z.B. empfangsfeldstärkeabhängige Güteinformationen oder Belegungsintensitäten in den Datensammlern erfaßt und abgespeichert werden. Vom Masterdatensammler erfolgt dann in Abhängigkeit von den momentanen Verteilkriterien für jedes Endgerät eine quasi-stationäre Zuordnung zu einem und nur einem der Datensammler für die sich anschießenden Telegrammübermittlungen über das Funknetz, bis z.B. periodisch oder ereignisgesteuert eine neue Zuordnung eines Endgerätes wieder zu einem und nur einem eventuell anderen der Datensammler erfolgt. Die Datensammler fungieren im Netz bidirektional, auch untereinander als Relaisstationen zur Weiterleitung der Datentelegramme an den Masterdatensammler. Gegen dann womöglich auf unterschiedlichen Wegen entstehende Telegrammdubletten können die Datensammler einfach mit einer Sperre gegen Mehrfachauslesen desselben Datentelegrammes ausgestattet werden.

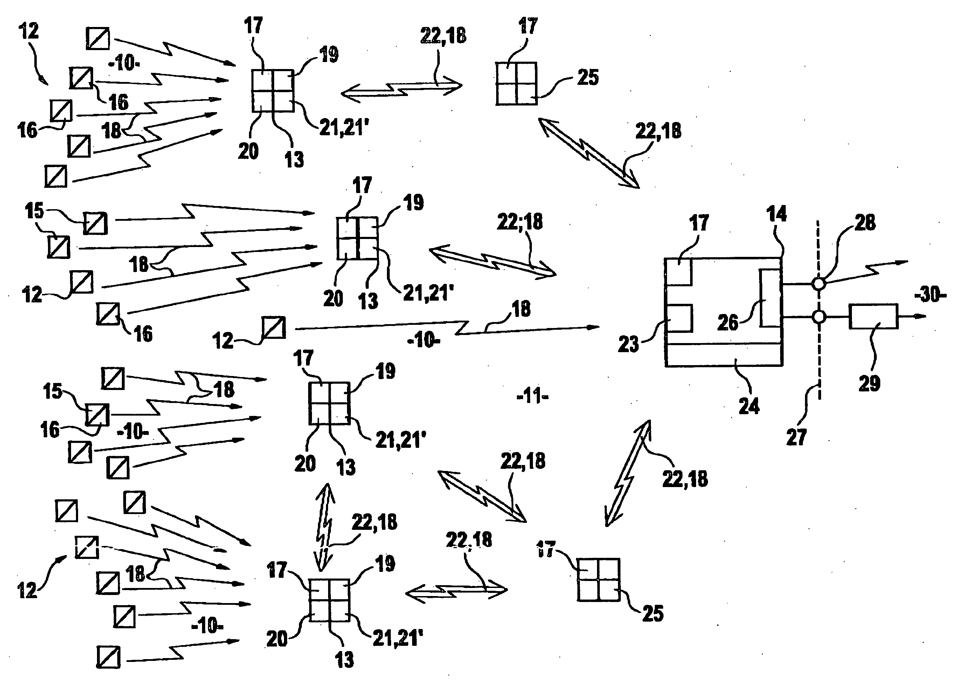

Bezüglich weiterer Vorteile sowie zusätzlicher Abwandlungen und Weiterbildungen der erfindungsgemäßen Lösung wird außer auf die weiteren Ansprüche auch auf nachstehende Beschreibung eines in der Zeichnung unter Beschränkung auf das Wesentliche stark abstrahiert und nicht maßstabsgerecht skizzierten bevorzugten Realisierungsbeispiels zum erfindungsgemäß ausgestalteten Funknetz verwiesen.

Die einzige Figur der Zeichnung zeigt nach Art eines einpoligen Blockschaltbildes die Datenübertragung von verteilt betriebenen Primärfunk-Endgeräten über bidirektional arbeitende Datensammler zu einem ebenfalls bidirektional arbeitenden Masterdatensammler.

Das im Rahmen vorliegender Erfindung betrachtete Funknetz 11 erstreckt sich von einer größeren Anzahl Endgeräten 12 (z.B. in Wohnungen eines Mehrfamilienhauses) über Primärfunkstrecken 10 zu mehreren Datensammlern 13 (z.B. in verschiedenen Etagen des Treppenhauses jener Wohnanlage) und über diese zu typisch nur einem, auch zentrale Koordinierungsfunktionen ausübenden, Masterdatensammler 14 (z.B. im zentralen Geräteraum oder am Grundstückseingang jener Anlage).

Jedes Endgerät 12 weist eine Daten-Erfassungseinheit 15 mit Identgeber zu seiner Individualisierung und eine Funk-Übertragungseinheit 16 auf, die gerätetechnisch beide apparativ integriert oder einfach zueinander assembliert sein können. Bei der Erfassungseinheit 15 im Endgerät 12 handelt es sich typisch um Meß- oder Registriereinrichtungen für verbrauchsabhängige Mengendaten wie über Verbrauch von Wasser, Strom oder Wärme. Die Übertragungseinheit 16 setzt die von der datengenerierenden Erfassungseinheit 15 anfallenden Verbrauchsdaten in digitale, serielle Telegramme 18 um und strahlt diese über ihren Sender ab. Dieser Vorgang wird im Rahmen vorliegender Erfindungsbeschreibung auch als Primärfunk 10 bezeichnet. Bei einem nur unidirektionalen Primärfunk 10 gemäß vorliegendem Realisierungsbeispiel sind die Endgeräte 12 nicht mit Empfängern ausgestattet.

Einer größeren Anzahl von Endgeräten 12 steht eine dagegen kleine Anzahl von Datensammlern 13 gegenüber. Jeder Datensammler 13 ist für bidirektionale Arbeitsweise mit einer Sende-Empfangs-Einrichtung 17 ausgestattet. Hierüber empfängt er die bei den Endgeräten 12 autark, quasi kontinuierlich - nämlich in einem typisch nach Minuten messenden Zeitraster stochastisch - generierten und über ihre Primärfunkstrecken 10 übermittelten Datentelegramme 18. Im Interesse langer batteriebetriebener Funktionsdauer wird der Empfang im Datensammler 13 nur in größeren Zeitintervallen von typisch einigen Stunden bis zu einigen Wochen von einem internen Intervallgeber freigeschaltet. Dann werden die im Datensammler 13 von verschiedenen Endgeräten 12 herkunftsgekennzeichnet empfangenen Datentelegramme 18 hinsichtlich des oben erläuterten Verteilkriteriums ausgewertet, insbesondere z.B. in einer Gütemeßeinrichtung 19 aufgrund der Empfangsgegebenheiten hinsichtlich der momentan auf der jeweiligen Primärfunkstrecke 10 gegebenen Datenübertragungsqualität bewertet. Das hinsichtlich der Zuordnung zu einem bestimmten der Endgeräte 12 individualisierte Ergebnis dieser Bewertung wird, ergänzt um einen Zeitstempel aus einem Zeitgeber 20 hinsichtlich Datums und Uhrzeit, in einem Speicher 21 abgelegt und dort durch später vom selben Endgerät 12 sich ergebende, jüngere Qualitätswerte (Empfangsgüten 22) überschrieben. Dieser Speicher 21 enthält insoweit also nur die Kennungen der Endgeräte 12, die von diesem Datensammler 13 empfangen werden, sowie die jenen zugeordneten aktuellen Verteilkriterien, wie nachstehend anhand von Empfangsgüten 22 beschrieben - aber nicht auch die Inhalte der empfangenen Datentelegramme 18.

Als die Empfangsgüte 22 kann je nach dem für die Meßeinrichtung 19 zu treibenden Aufwand z.B. über ein Fehlerprüfverfahren die Datenkonsistenz bezüglich des gerade über die Primärfunkstrecke 10 übermittelten Datentelegrammes 18 festgestellt werden. Für die Belange der Praxis genügt es aber schon, als Gütemeßeinrichtung 19 eine herkömmliche Feldstärkemeßschaltung am jeweiligen Empfangsort zu betreiben und dem empfangenen Endgerät 12 im Speicher 21 dann als Verteilkriterium die mittlere aktuelle Primärfunk-Empfangsfeldstärke zuzuordnen.

Der ebenfalls bidirektional arbeitende, also ebenfalls mit Sende-Empfangs-Einrichtungen 17 ausgestattete Masterdatensammler 14 ist dafür ausgelegt, zunächst, insbesondere bei Inbetriebnahme des Funknetzes 11, die Datensammler 13 quasi-parallel aber zeitlich doch nacheinander direkt oder auf beliebigen Umwegen etwa über Relaisstationen 25 aufzufordern, ihm ihre den empfangenen Endgeräten 12 zugeordnet abgespeicherten Verteilkriterien wie Güteinformationen 22 zu übermitteln. Weil in verschiedenen Datensammlern 13 bezüglich der Primärfunkstrecken 10 vom selben Endgerät 12 sehr unterschiedliche Güteinformationen 22 vorliegen können, werden diese im Masterdatensammler 14 selbst oder in einem ihm nachgeschalteten Auswertegerät über einen Vergleicher 23 nach Herkunft und Alter (also hinsichtlich der Kennung des Endgerätes 12 und des Zeitstempels aus den Zeitgebern 20 in den Datensammlern 13) sortiert, um für jedes einzelne der Endgeräte 12 festzustellen, zu welchem der Datensammler 13 aktuell die qualitativ beste Verbindung über eine Primärfunkstrecke 10 für die Übermittlung seiner Datentelegramme 18 besteht. Dementsprechend erfolgt nun vom Masterdatensammler 14 aus über Funk zu den einzelnen Datensammlern 13 eine feste Zuordnung von jeweils nur einem der Datensammler 13 zu einem ganz bestimmten der Endgeräte 12. Fortan können die Datentelegramme 18 eines bestimmten Endgerätes 12 von diesem einen, einzig bestimmten Datensammler 13 inhaltlich aufgenommen, zwischengespeichert und auf Aufforderung über das Netz 11 zum Masterdatensammler 14 weitergeleitet werden.

Die technische Grundausstattung des Masterdatensammlers 14 ist diejenige der Datensammler 13. Deshalb kann, wie in der Mitte der Skizze berücksichtigt, bei Vorliegen entsprechender Übertragungsgebenheiten der Masterdatensammler 14 auch direkt, ohne den Umweg über zwischengeschaltete Datensammler (13), Datentelegramme 18 über Primärfunkstrecken 10 von Endgeräten 12 aufnehmen, die er nicht anderen Datensammlern (13) sondern direkt sich selbst zugeordnet hat. Das ist insbesondere von praktischem Interesse, wenn der Masterdatensammler nicht abseits betrieben wird, sondern etwa in einer Wohnanlage inmitten der Installation der Endgeräte 12, so daß nur für besonders ungünstig gelegene Übertragungsstrecken im Netz 11 zusätzliche Datensammler 13 zwischenzuschalten sind.

Im jeweiligen Datensammler 13 ist eine zeitgestempelte Zwischenspeicherung nur jeweils des vom zugeordneten Endgerät 12 aktuell empfangenen Datentelegrammes 18 in einem besonderen, gerade auf dessen Länge bemessenen Speicherbereich 21' unter Überschreiben des bisherigen dortigen Speicherinhaltes vom selben Endgerät 12 zu bevorzugen. Der dem Telegramm 18 eines Endgerätes 12 angepaßte kleine Speicherumfang erbringt die Vorteile, im Datensammler 13 keine Datenselektion betreiben zu müssen, weil von jedem zugeordneten Endgerät 12 nur das aktuellste Datentelegramm 18 abgespeichert ist, apparativ preisgünstig zu sein und mit niedrigem Energiebedarf betrieben werden zu können. Ohne das aktuelle Datentelegramm 18 für die Weiterleitung mit anderen Telegrammen 18 dieses oder eines anderen Endgerätes 12 paketieren zu müssen, kann nun dieses aktuell hier mit seinem Zeitstempel zwischengespeicherte, vergleichsweise kurze Datentelegramm 18 zu beliebigem Zeitpunkt zur Verarbeitung ausgelesen und gerade wegen der unpaketierten, kurzen Datentelegramme 18 unsynchronisiert über beliebige Wege auch durch ein zeitscheibensynchronisiertes Funknetz 11 weitergeleitet werden, das mit paketierten und deshalb langen Telegrammen nicht betreibbar wäre. So ist eine nicht festgeschriebene sondern flexible und daher auch selbstlernend an die aktuellen Gegebenheiten anpaßbare Datenübermittlung realisiert.

Die Zwischenspeicherung nur des jeweils aktuellen Datentelegrammes 18 eines Endgerätes 12 in nur dem einen ihm am Ende der Primärfunkstrecke 10 zugeordneten Datensammler 12 eröffnet vor allem auch die Möglichkeit, vom Masterdatensammler 14 frei entscheiden zu lassen, wann ihm das stets gültige Datentelegramm 18 von einem bestimmten Endgerät 12 genehm ist; also die Übermittlung an die Datenverarbeitung im Masterdatensammler 14 nicht pauschal aufzurufen und nicht vom Datensammler 13 bestimmen zu lassen, sondern vom Masterdatensammler 14 her über die bidirektionale Funkverbindung durch das Netz 11 abzurufen, wenn gerade das Telegramm 18 eines bestimmten Endgerätes 12 dort für die Weiterverarbeitung oder Auswertung benötigt wird. Statt dessen kann aber auch, vorzugsweise stochastisch in einem der bekannten Zeitschlitzverfahren, eine nicht dezidierte Aufforderung vom Masterdatensammler 14 an alle Datensammler 13 ergehen, alle ihre aktuell vorliegenden Datentelegramme 18 kurzfristig seriell zu übermitteln. Jedenfalls agiert für den Masterdatensammler 14 nun in der Regel nicht mehr das jeweilige Endgerät 12 sondern der ihm aktuell einzig zugeordnete Datensammler 13 als die Datenquelle, die es in diesem Funknetz 11 für jedes Endgerät 12 nur einmal gibt.

In einem Vorspann oder Anhang zum Datentelegramm 18 aus der Primärfunkstrecke 10 können vom jeweiligen Datensammler 13 zusätzliche, z.B. betriebstechnische Informationen an den Masterdatensammler 14 mitgesandt werden, etwa über die noch verfügbare Batteriekapazität bei autark arbeitenden Datensammlern 13.

Neben der Telegrammdurchschaltung wird im Datensammler 13 weiterhin laufend das Verteilkriterium wie insbesondere die Güte 22 der aktuellen Verbindung über die Primärfunkstrecke 10 festgestellt und dem jeweiligen Endgerät 12 zugeordnet zeitabhängig abgespeichert. Die anderen Datensammler 13, die auch die Telegramme 18 von diesem Endgerät 12 empfangen, obgleich sie ihm nicht zugeordnet sind, nehmen dessen Datentelegramme 18 nicht inhaltlich sondern nur zum Ermitteln, Abspeichern und Bereithalten der aktuellen Güteinformation 22 auf. Dadurch ist sichergestellt, daß diese anderen Datensammler 13 selbst auf unspezifizierten Aufruf seitens des Masterdatensammlers 14 keine primären Endgeräte-Daten zusätzlich zum einzig autorisierten ersten Datensammler 13 über das Funknetz 11 übermitteln können. Dennoch sind alle realisierbaren Primärfunkstrecken 10 zu allen Datensammlern 13 jederzeit hinsichtlich ihrer Verteilkriterien bekannt, um das Netz 11 jederzeit aufgrund der bisherigen Kriterien sich neu konfigurieren lasen zu können.

Die über den Vergleicher 23 vom Masterdatensammler 14 vorgegebene Zuordnung mehrerer Endgeräte 12 zu einem und nur jeweils einem Datensammler 13 bleibt also für jedes Endgerät 12 bestehen, bis sie zeitgesteuert, zufallsgesteuert oder ereignisgesteuert erneut vorgenommen wird, etwa bis im Masterdatensammler 14 einmal ein Anlaß auftritt, die Datensammmler 13 hinsichtlich eines bestimmten Endgerätes 12 erneut zur Übermittlung aktueller Verteilkriterien wie Güteinformationen 22 aufzurufen. Dem kann zugrunde liegen, daß sich Störungen in den Datentelegrammen 18 von diesem Endgerät 12 eingestellt haben, oder daß die Energieversorgung eines der Datensammler 13 sich dem Ende zuneigt und die bisher hierüber abgewickelte Übertragung der Datentelegramme 18 deshalb künftig, über andere der hinsichtlich brauchbarer Primärfunkverbindungen 10 dafür verfügbaren Datensammler 13 aufgeteilt, umgeleitet werden soll.

In der Mitte der Zeichnung ist oben berücksichtigt, daß es zum Überwinden problematischer Funkstrecken zweckmäßig sein kann, zwischen den Datensammlern 13 und dem Masterdatensammler 14 des Funknetzes 11 eigens ebenfalls bidirektional arbeitende Relaisstationen 25 zu betreiben. Diese übermitteln Anforderungen des Masterdatensammlers 14 und vermitteln zufallsbedingt von gerade erfaßten Datensammlern 13 gesendete Datentelegramme 18 (bzw. Güteinformationen 22 oder dergleichen Verteilkriterien) an den Masterdatensammler 14, so daß es in diesen Relaisstationen 25 nicht unbedingt auch eines Speicherbedarfes für die Zwischenspeicherung und Bereithaltung zu übermittelnder Informationen bedarf. Da aber jede Relaisstation 25 im übrigen ohnehin wie die Datensammler 13 mit Sende-Empfangs-Einrichtung 17 ausgestattet ist, können auch letztere unmittelbar (vgl. in der Zeichnung unten) eine Relaisfunktion ausüben, indem die Übermittlung von einem Datensammler 13 über wenigstens einen beliebigen anderen, günstiger gelegenen der Datensammler 13 zum Masterdatensammler 14 hin erfolgt, wenn z.B. die direkte Verbindung infolge einer Abschirmung funktechnisch unterbunden ist. Da somit im Anschluß an die Primärfunkverbindung 10 die Datenübermittlung über das Netz 11 von einem Datensammler 13 zum Masterdatensammler 14 zufallsbedingt längs unterschiedlicher Wege parallel und/oder seriell über mehrere andere Datensammler 13 erfolgen kann, ist es an sich nicht ausschließen, daß der Masterdatensammler 14 das aktuell geltende Datentelegramm 18 eines der Endgeräte 12 zeitlich versetzt mehrfach empfängt. Um das aufwendige Aussortieren solcher Dubletten im Masterdatensammler 14 zu vermeiden, sind die Datensammler 13 zweckmäßigerweise darauf eingerichtet, das gemäß Zeitstempel neueste einem bestimmten Endgerät 12 zugeordnete, sich wiederholende Datentelegramm 18 kein zweites Mal aus ihrem Datenspeicher 21' auslesen zu lassen, so daß die Dubletten auf ihrem Weg durch das Netz 11 im Zuge des Weiterreichens zwischen Datensammlern 13 gewöhnlich von selbst wieder verschwinden.

Der Masterdatensammler 14 ist vorzugsweise mit einer internen oder externen Datenverarbeitungseinrichtung 26 ausgestattet, die eine zumindest vorläufige Aufbereitung der im Zentralspeicher 24 bereitgehaltenen Datentelegramme 18 etwa zur Kontrolle hinsichtlich Plausibilität oder zur Komprimierung vornimmt und über eine Schnittstelle 27 dann ausgeben läßt, etwa über eine drahtlose (hochfrequente oder optoelektronische) Kopplung 28 bzw. über ein drahtgebundenes Modem 29 an ein transportables oder stationäres Auswertegerät etwa für die Verbrauchsabrechnung und Rechnungserstellung.

## Patentansprüche

1. Datenübermittlungs-Funknetz (11) mit bidirektional arbeitenden Datensammlern (12), die Datentelegramme (18) von datengenerierenden Endgeräten (12) an einen Daten dokumentierenden Masterdatensammler (14) übermitteln, **dadurch gekennzeichnet, daß** die Datensammler (13) bezüglich der jeweiligen Primärfunkstrecke (10) zwischen einem Endgerät (12) und einem ersten Datensammler (13) im Netz (11) Verteilkriterien ermitteln und an den Masterdatensammler (14) übermitteln, aufgrund derer eine Zuordnung der Übertragung des originären Datentelegrammes (18) von einem Endgerät (12) über seine Primärfunkstrecke (10) singulär zu einem und nur einem der Datensammler (13) erfolgt, dem auch andere Endgeräte (12) singulär zugeordnet sein können und das auch anderen, nicht ihm zugeordneten Endgeräten (12) zugehörige Verteilkriterien aufnimmt und dem Masterdatensammler (14) zur Verfügung stellt.

2. Funknetz nach dem vorangehenden Anspruch, **dadurch gekennzeichnet, daß** die Zuverlässigkeit der Datenübertragung über die Primärfunkstrecke (10) von einem Endgerät (12) zu Datensammlern (13) ein Verteilkriterium im jeweiligen Datensammler (13) ist.

3. Funknetz nach dem vorangehenden Anspruch, **dadurch gekennzeichnet, daß** die Güte des Empfangs über die jeweilige unidirektionale Primärfunkstrecke (10) von einem Endgerät (12) zu den Datensammlern (13) ein Verteilkriterium im jeweiligen Datensammler (13) ist.

4. Funknetz nach einem der vorangehenden Ansprüche, **dadurch gekennzeichnet, daß** die Belegung von Datensammlern (13) mit Primärfunkstrecken (10) ein Verteilkriterium ist.

5. Funknetz nach einem der vorangehenden Ansprüche, **dadurch gekennzeichnet, daß** die Datensammler (13) mit Speichern (21) und Zeitgebern (20) für eine zeitliche Zuordnung der den Endgeräten (12) aktuell zugeordneten Verteilkriterien ausgestattet sind.

6. Funknetz nach einem der vorangehenden Ansprüche, **dadurch gekennzeichnet, daß** jeder Datensammler (13) mit einem zeitgestempelten Speicherbereich (21') vom Volumen eines Datentelegrammes (18) pro zugeordnetem Endgerät (12) ausgestattet ist.

7. Funknetz nach einem der vorangehenden Ansprüche, **dadurch gekennzeichnet, daß** die Datensammler (13) mit einer Sperre gegen wiederholtes Auslesen desselben zwischengespeicherten Datentelegrammes (18) ausgestattet sind.

8. Funknetz nach einem der vorangehenden Ansprüche, **dadurch gekennzeichnet, daß** beim Masterdatensammler (14) ein Vergleicher (23) für die von den Datensammlern (13) übermittelten Verteilkriterien und zur singulären Zuordnung der Endgeräte (12) zu abhängig von den Verteilkriterien bestimmten Datensammlern (13) vorgesehen ist.

9. Funknetz nach dem vorangehenden Anspruch, **dadurch gekennzeichnet, daß** die einmal in Abhängigkeit von den Verteilkriterien erfolgte Zuordnung der Endgeräte (12) zu bestimmten Datensammlern (13) bestehen bleibt, bis zeitgesteuert, zufallsgesteuert oder aufgrund von Ereignissen im Netz (11) eine neue Zuordnung aufgrund aktueller Verteilkriterien erfolgt.

10. Funknetz nach einem der vorangehenden Ansprüche, **dadurch gekennzeichnet, daß** zwischen den Datensammlern (13) und dem Masterdatensammler (14) Relaisstationen (25) vorgesehen sind.

11. Funknetz nach dem vorangehenden Anspruch, **dadurch gekennzeichnet, daß** auch die Relaisstationen (25) Datensammler (13) sind.

12. Funknetz nach einem der vorangehenden Ansprüche, **dadurch gekennzeichnet, daß** der Masterdatensammler (14) mit einer Datenverarbeitungseinrichtung (26) und mit einer Schnittstelle (27) zu einem Auswertegerät (30) ausgestattet ist.
